# EUROPÄISCHE PATENTSCHRIFT

(11) **EP 1 537 482 B1**
(45) Veröffentlichungstag und Bekanntmachung des Hinweises auf die Patenterteilung: **12.10.2005**
(21) Anmeldenummer: 03807770.7
(22) Anmeldetag: 01.08.2003
(51) Int. Cl.: G06F 11/16

(54) **VERFAHREN UND SCHALTUNGSANORDNUNG ZUR SYNCHRONISATION SYNCHRON ODER ASYNCHRON GETAKTETER VERARBEITUNGSEINHEITEN**
METHOD AND CIRCUIT ARRANGEMENT FOR SYNCHRONIZATION OF SYNCHRONOUSLY OR ASYNCHRONOUSLY CLOCKED PROCESSING UNITS
PROCEDE ET ENSEMBLE CIRCUIT DE SYNCHRONISATION D'UNITES DE TRAITEMENT CADENCEES DE MANIERE SYNCHRONE OU ASYNCHRONE

(30) Priorität: 12.09.2002 EP 02020602; 12.12.2002 EP 02027847
(43) Veröffentlichungstag der Anmeldung: 08.06.2005
(73) Patentinhaber: SIEMENS AKTIENGESELLSCHAFT, 80333 München (DE)
(72) Erfinder: PELESKA, Pavel, 82166 Gräfelfing (DE); SCHNABEL, Dirk, 81369 München (DE); WEBER, Anton, 81825 München (DE)
(86) Internationale Anmeldenummer: PCT/EP2003/008559
(87) Internationale Veröffentlichungsnummer: WO 2004/034260

(56) Entgegenhaltungen:
- DE-A- 4 104 114
- FR-A- 2 748 136
- US-A- 5 353 436
- US-A- 6 141 769
- US-A1- 2002 026 604

## Beschreibung

In Telekommunikationssystemen, in Data-Centern und anderen hochverfügbaren Systemen werden in vielen Fällen bis zu einigen Hundert sogenannter Prozessorboards eingesetzt, um die erforderliche Rechenleistung vorzusehen. Ein solches Prozessorboard besteht typischerweise aus einem Prozessor bzw. einer CPU (Central Processing Unit), einem Chip Set, Hauptspeicher und Peripheriebausteinen.

Die Wahrscheinlichkeit des Auftretens eines Hardware-Defektes eines typischen Prozessorboards pro Jahr liegt im einstelligen Prozentbereich. Aufgrund der großen Anzahl zu einem System zusammengefaßter Prozessorboards ergibt sich eine auf den Jahreszeitraum bezogene sehr hohe Wahrscheinlichkeit eines Ausfalls einer beliebigen Hardware-Komponente, wobei ein solcher Einzelausfall, falls geeignete Vorkehrungen nicht getroffen werden, den Ausfall des gesamten Systems hervorrufen kann.

Insbesondere an Telekommunikationssysteme, in zunehmendem Ma-βe auch an Data-Center, wird die Forderung nach einer hohen Systemverfügbarkeit gestellt. Diese wird beispielsweise in Prozent ausgedrückt, oder es wird die maximal zulässige Ausfallzeit pro Jahr angegeben. Typische Anforderungen sind z.B. eine Verfügbarkeit von >99.999% bzw. eine Nichtverfügbarkeit von höchstens einigen Minuten im Jahr. Da üblicherweise der Austausch eines Prozessorboards und die Wiederherstellung des Dienstes im Falle eines Hardwaredefektes eine Zeit beansprucht, die im Bereich einige 10 Minuten bis einige Stunden liegt, müssen für den Fall eines Hardwaredefektes auf Systemebene entsprechende Vorkehrungen getroffen werden, um die Forderung nach der Systemverfügbarkeit erfüllen zu können.

Bekannte Lösungen zur Einhaltung solch hoher Anforderungen an die Systemverfügbarkeit sehen redundante Systemkomponenten vor. Die bekannten Verfahren lassen sich in zwei hauptsächliche Gruppen einteilen: softwarebasierte Verfahren und hardwarebasierte Verfahren.

Bei softwarebasierten Verfahren wird typischerweise eine Middleware eingesetzt. Die softwarebasierte Lösung erweist sich jedoch als wenig flexibel, da lediglich diejenige (Applikations-)Software in einem solchen System eingesetzt werden kann, die für dieses besondere Redundanzschema entwickelt wurde. Dies schränkt das Spektrum einsetzbarer (Applikations-)Software erheblich ein. Darüber hinaus ist die Entwicklung von Applikationssoftware für Softwareredundanzprinzipien in der Praxis äußerst aufwendig, wobei die Entwicklung zusätzlich ein kompliziertes Testverfahren nach sich zieht.

Das Grundprinzip hardwarebasierter Verfahren beruht darauf, die Redundanz auf Hardwareebene zu kapseln, so daß dies für die Software transparent ist. Der wesentliche Vorteil einer von der Hardware selbst verwalteten Redundanz ist der, daß die Applikationssoftware durch das Redundanzprinzip nicht beeinträchtigt wird und somit in den meisten Fällen jede beliebige Software zum Einsatz kommen kann.

Ein in der Praxis häufig anzutreffendes Prinzip für hardwarefehlertolerante Systeme, deren Redundanz für die Software transparent ist, ist das sogenannte Lockstep-Prinzip. Lockstep bedeutet, daß identisch aufgebaute Hardware, z.B. zwei Boards, gleichartig taktsynchron betrieben werden. Durch Hardwaremechanismen wird sichergestellt, daß die redundante Hardware zu einem gegebenen Zeitpunkt identische Eingangsstimuli erfährt und dadurch zu identischen Ergebnissen kommen muß. Die Ergebnisse der redundanten Komponenten werden verglichen, im Fall einer Abweichung wird ein Fehler festgestellt und geeignete Maßnahmen werden eingeleitet (Alarmierung an das Bedienpersonal, partielle oder vollständige Sicherheitsabschaltung, Systemneustart).

Die grundlegende Voraussetzung für die Implementierung eines Lockstep-Systems ist das taktweise deterministische Verhalten aller im Board enthaltenen Komponenten, also CPUs, Chip Sets, Hauptspeicher etc. Taktweise deterministisches Verhalten bedeutet dabei, daß diese Komponenten im fehlerfreien Fall identische Ergebnisse zu identischen Takt-Zeitpunkten liefern, wenn die Komponenten identische Stimuli zu identischen Takt-Zeitpunkten erhalten. Taktdeterministisches Verhalten setzt ferner die Verwendung taktsynchroner Schnittstellen voraus. Asynchrone Schnittstellen bewirken im System in vielen Fällen eine gewisse zeitliche Unschärfe, wodurch das taktsynchrone Gesamtverhalten des Systems nicht aufrecht erhalten werden kann.

Gerade für Chip Sets und CPUs bieten asynchrone Schnittstellen jedoch technologische Vorteile bei der Erhöhung der Leistungsfähigkeit, wodurch eine taktsynchrone Betriebsweise nach dem Lockstep-Verfahren unmöglich wird. Zudem verwenden moderne CPUs zunehmend Mechanismen, die eine taktsynchrone Betriebsweise unmöglich machen. Dies sind beispielsweise interne, nach außen nicht sichtbare Korrekturmaßnahmen, z.B. Korrektur eines internen, korrigierbaren Fehlers beim Zugriff auf den Cache-Speicher, die zu einer geringfügigen Verzögerung der Befehlsabarbeitung führen können, oder die spekulative Ausführung von Befehlen. Ein weiteres Beispiel ist die zukünftig zunehmende Implementierung von CPU-internen taktfreien Ausführungseinheiten, die erhebliche Vorteile hinsichtlich Geschwindigkeit und Verlustleistung ermöglichen, jedoch ein taktsynchrones bzw. deterministisches Arbeiten der CPU verhindern.

Aus der US-Patentschrift 5,226,152 ist eine funktionale Lockstep-Anordnung für redundante Prozessoren bekannt, bei der alle Prozessoren an eine Logik angeschlossen sind, welche die Zugriffe der Prozessoren auf die gemeinsame Peripherie synchronisiert und einen funktionalen Lockstep-Betrieb der redundanten Prozessoren ermöglicht. Die Logik nutzt dabei das Wait-Signal der Prozessoren.

Mit Blick auf die eingangs genannten Prozessorboards ergibt sich jedoch mit dieser Anordnung, die nur eine zentrale Logik aufweist, ein erheblicher Nachteil, der darin besteht, daß neben den Prozessorboards jeweils für eine bestimmte Anzahl von Prozessorboards ein Logik-Board vorzusehen ist, welches dann die Synchronisation der Peripherie-Zugriffe steuert.
Diese Logik-Boards müßten dann jedoch ihrerseits überwacht werden, was zu komplexen Überwachungsmechanismen führen würde.

Mit anderen Worten, während die Anordnung gemäß US 5,226,152 geeignet scheint, einen funktionalen Lockstep für Einplatinensysteme mit mehreren Prozessoren vorzusehen, ist diese Anordnung für Systeme mit mehreren identischen Prozessorboards der eingangs genannten Art ungeeignet.

Ferner ist aus der US-Patentschrift 5,353,436 eine funktionale Lockstep-Anordnung für redundante Prozessoren bekannt, bei der jedem Prozessor eine Sync-Logikschaltung, ein Zählelement zum Zählen von Prozessorevents und eine Vergleicherschaltung zugeordnet sind, welche die Synchronisation der Prozessoren bewirken und einen funktionalen Lockstep-Betrieb der redundanten Prozessoren ermöglichen. Die Logikschaltungen nutzen dabei ebenfalls das Wait-Signal der Prozessoren.

Die Vergleicherschaltungen sind miteinander gekoppelt. Beim Auftreten von Interrupts vergleichen die Vergleicherschaltungen jeweils den Wert des lokalen Event-Zählers mit den Werten der anderen Event-Zähler der Anordnung und signalisieren jeweils an die lokale Sync-Logikschaltung die Relation des lokalen Event-Zählerwerts zu den anderen Event-Zählern der Anordnung.

Mit anderen Worten werden zwischen den Sync-Logikschaltungen Parameter ausgetauscht, die den aktuellen Programmabarbeitungsstand der einzelnen Prozessoren charakterisieren. Eine Überprüfung der die Synchronisation auslösenden Prozessor-Transaktionen auf Gleichheit zwischen den einzelnen Prozessoren ist dabei jedoch nicht möglich.

Die FR-A-2 748 136 offenbart ein Verfahren zur Synchronisations von Prozessoren in Funktionalem lockstep-Betrieb, bei dem zum Vergleich von Transaktionen die Bosse beider Prozessoren an die Synchronisationbausteine geführt werden. Diese Vergleichen dann alle Bits der betreffenden Bustransaktionen.

Es ist daher eine Aufgabe der vorliegenden Erfindung, ein Verfahren und eine Anordnung anzugeben, welche einen funktionalen Lockstep-Betrieb ermöglichen und es gleichzeitig erlauben, die zur Synchronisation redundanter Prozessoren genutzten Prozessor-Transaktionen effizienter auf Gleichheit zu überprüfen und zu validieren.

Diese Aufgabe wird durch ein Verfahren zur Synchronisation synchron oder asynchron getakteter Verarbeitungseinheiten gemäß der Merkmale des Patentanspruchs 1 und eine Schaltungsanordnung zur Synchronisation synchron oder asynchron getakteter Verarbeitungseinheiten gemäß der Merkmale des Patentanspruchs 17 gelöst.

Bevorzugte Ausführungsformen sind Gegenstand der abhängigen Ansprüche.

Erfindungsgemäß wird ein Verfahren zur Synchronisation identischer oder verschiedener, redundanter Verarbeitungseinheiten PRO₀, PRO₁, die identische Instruktionsfolgen abarbeiten und synchron oder asynchron getaktet sind, vorgesehen, demgemäß nach außerhalb der Verarbeitungseinheiten PRO₀, PRO₁ wirkende Transaktionen durch den Verarbeitungseinheiten PRO₀, PRO₁ zugeordnete Bausteine EQ₀, EQ₁ zur Synchronisation der Verarbeitungseinheiten PRO₀, PRO₁ verwendet werden, indem die Verarbeitungseinheiten jeweils durch die zugeordneten Bausteine verzögert und dadurch angeglichen werden, bis die Instruktionsausführung aller Verarbeitungseinheiten die aktuelle Transaktion erreicht hat, wobei durch die Bausteine EQ₀, EQ₁ Parameter über Verbindungen L₀, L₁ zur Synchronisation der Verarbeitungseinheiten PRO₀, PRO₁ übermittelt werden, welche die Transaktionen charakterisieren.

Dabei können folgende Transaktionen zur Synchronisation verwendet werden:
- nicht-zwischenspeicherbare Speichertransaktionen betreffend einen den jeweiligen Verarbeitungseinheiten PRO₀, PRO₁ zugeordneten lokalen Speicher MEM₀, MEM₁ und/oder
- Eingabe/Ausgabetransaktionen zu Eingabe/Ausgabebausteinen I/O₀, I/O₁ und/oder
- speicherabgebildete Ein/Ausgabetransaktionen zu externen Registern REG₀, REG₁ und/oder
- nicht-zwischenspeicherbare Speichertransaktionen betreffend einen gemeinsamen Speicher CMEM der Verarbeitungseinheiten PRO₀, PRO₁.

Lesende Transaktionen können dabei ausgeführt werden, indem der einer Verarbeitungseinheit zugeordnete Baustein die Verarbeitungseinheit bis zum Eintreffen der zu lesenden Daten im Wartezustand beläßt und den oder die Parameter der lesenden Transaktion an den am direktesten mit dem Transaktionsziel I/O₀, I/O₁, MEM₀, MEM₁, REG₀, REG₁, CMEM verbundenen Baustein sendet, wobei der am direktesten mit dem Transaktionsziel verbundene Baustein den oder die Parameter der anderen Bausteine sowie den oder die lokal erzeugten Parameter empfängt und vergleicht und bei Übereinstimmung die lesende Transaktion ausführt und die gelesenen Daten an alle Bausteine verteilt, woraufhin alle Bausteine die gelesenen Daten an die zugeordneten Verarbeitungseinheiten weiterleiten und die Fortsetzung der Instruktionsausführung ermöglichen.

Schreibende Transaktionen können ausgeführt werden, indem der einer Verarbeitungseinheit zugeordnete Baustein die Verarbeitungseinheit bis zum Abschluß des Schreibenvorganges im Wartezustand belassen kann und den oder die Parameter der schreibenden Transaktion an den am direktesten mit dem Transaktionsziel I/O₀, I/O₁, MEM₀, MEM₁, REG₀, REG₁, CMEM verbundenen Baustein sendet, wobei der am direktesten mit dem Transaktionsziel verbundene Baustein den oder die Parameter der anderen Bausteine sowie den oder die lokal erzeugten Parameter empfängt und vergleicht und bei Übereinstimmung die schreibende Transaktion ausführt und den erfolgten Schreibvorgang, an alle Bausteine quittiert, woraufhin alle Bausteine die Fortsetzung der Instruktionsausführung der zugeordneten Verarbeitungseinheiten ermöglichen.

Vorteilhaft lassen sich externe Ereignisse, z.B. Interrupts, im Zusammenhang mit dem erfindungsgemäßen Synchronisationsverfahren basierend auf Transaktionen behandeln, wenn die Behandlung der externen Ereignisse durch das Lesen eines Wertes, z.B. Interruptvektor, von einer Speicherstelle oder eines Registers eingeleitet wird und zudem sichergestellt ist, daß alle Verarbeitungseinheiten an der gleichen Stelle der Befehlsausführung die externen Ereignisse präsentiert bekommen. Die die Ereignisbehandlung einleitende lesende Transaktion wird wie oben beschrieben durchgeführt, z.B. mittels eines Interrupt Acknowledge Zyklus.

Ein geeignetes Verfahren zur Synchronisation externer Ereignisse ist in der Europäischen Patentanmeldung EP 1 398 701 beschrieben und sieht vor, daß die externen Ereignisse zwischengespeichert werden, wobei die gespeicherten externen Ereignisse in einem gesonderten Betriebsmodus der Verarbeitungseinheiten zur Verarbeitung durch zumindest je eine Ausführungseinheit der Verarbeitungseinheiten abgerufen werden und wobei die Verarbeitungseinheiten in diesen Betriebsmodus ansprechend auf die Erfüllung einer durch Befehle vorgebbaren oder fest vorgegebenen Bedingung eintreten und die Fortsetzung der Instruktionsausführung durch die Bausteine EQ₀, EQ₁ verzögert wird, bis alle Verarbeitungseinheiten den gesonderten Betriebsmodus beendet haben.

Der Wechsel in den gesonderten Betriebsmodus wird beispielsweise ausgeführt, falls durch Komparatorelemente K der Verarbeitungseinheiten die Übereinstimmung von Zählelementen CIC mit Registerelementen MIR ermittelt wird, wobei der Inhalt der Registerelemente MIR durch Befehle vorgebbar und für alle Verarbeitungseinheiten PRO₀, PRO₁ identisch ist und das Zählelement CIC die Anzahl der durch die Ausführungseinheit ausgeführten Instruktionen seit dem letzten Wechsel in den gesonderten Betriebsmodus enthält.

Eine Fehlerbehandlung kann eingeleitet werden, falls der am direktesten mit dem Transaktionsziel verbundene Baustein eine Abweichung der Parameter der anderen Bausteine sowie des oder der lokal erzeugten Parameter(s) feststellt. Die Fehlerbehandlung kann dabei die auszuführende Transaktion stoppen und eine Routine zur Diagnose, Fehlerisolierung und gegebenenfalls zur Wiederherstellung der Synchronität starten. Sind N (z.B. N=3) Verarbeitungseinheiten vorhanden, kann eine (N-1) aus N Mehrheitsentscheidung oder allgemein eine (N-M) aus N Mehrheitsentscheidung getroffen und die abweichende(n) Verarbeitungseinheit(en) deaktiviert werden.

Ferner kann eine Ausfallerkennung einzelner Verarbeitungseinheiten erfolgen, indem für eine beliebige Transaktion beginnend mit dem frühesten Verfügbarwerden des oder der Parameter(s) beim Baustein einer Verarbeitungseinheit nicht oder erst nach Ablauf einer vorgebbaren Zeit eintreffende Parameter verworfen werden, wobei für Verarbeitungseinheiten mit nicht oder erst nach Ablauf der vorgebbaren Zeit eintreffenden Parametern eine Fehlerbehandlung initiiert wird.

Die Erfindung sieht ferner eine Anordnung zur Synchronisation synchron oder asynchron getakteter Verarbeitungseinheiten PRO₀, PRO₁ redundanter Datenverarbeitungssysteme vor, die folgendes aufweist:
- mindestens zwei Verarbeitungseinheiten PRO₀, PRO₁ zur Abarbeitung identischer Instruktionsfolgen,
- den Verarbeitungseinheiten jeweils exklusiv zugeordnete Peripherie MEM₀, MEM₁ zum Speichern und/oder Austauschen von Daten,
- von allen Verarbeitungseinheiten gemeinsam nutzbare Peripherie I/O₀, I/O₁, REG₀, REG₁, CMEM zum Speichern und/oder Austauschen von Daten,
- den Verarbeitungseinheiten zugeordnete Bausteine EQ₀, EQ₁, wobei die Bausteine EQ₀, EQ₁ Mittel zum Überwachen von Transaktionen sowie Mittel zum Anhalten der zugeordneten Verarbeitungseinheit bis zum Erreichen der aktuellen Transaktion durch alle Verarbeitungseinheiten aufweisen sowie Mittel L₀, L₁ zum Übertragen von die Transaktionen charakterisierenden Parametern an andere Bausteine.

Die Bausteine EQ₀, EQ₁ können dabei Mittel zum Synchronisieren der Verarbeitungseinheiten insbesondere anhand folgender Transaktionen aufweisen:
- nicht-zwischenspeicherbare Speichertransaktionen betreffend einen den jeweiligen Verarbeitungseinheiten PRO₀, PRO₁ zugeordneten lokalen Speicher MEM₀, MEM₁ und/oder
- Eingabe/Ausgabetransaktionen zu Eingabe/Ausgabebausteinen I/O₀, I/O₁ und/oder
- speicherabgebildete Ein/Ausgabetransaktionen zu externen Registern REG₀, REG₁ und/oder
- nicht-zwischenspeicherbare Speichertransaktionen betreffend einen gemeinsamen Speicher CMEM der Verarbeitungseinheiten PRO₀, PRO₁.

Dabei weisen die Bausteine vorteilhaft Mittel zum Bilden folgender Parameter repräsentativ für Transaktionen auf:
- Eingabe/Ausgabeadressen und/oder
- Speicheradressen und/oder
- zu transferierende Daten und/oder
- Art der Transaktion und/oder
- eine aus den Eingabe/Ausgabeadressen und/oder den Speicheradressen und/oder den zu transferierenden Daten und/oder der Art der Transaktion gebildete Signatur.

Zur Behandlung externer Ereignisse wie z.B. Interrupts weisen die Verarbeitungseinheiten vorzugsweise folgendes auf:
- mindestens eine Ausführungseinheit EU,
- mindestens ein Zählerelement CIC zum Zählen der durch die Ausführungseinheit ausgeführten Instruktionen seit dem letzten Wechsel in den gesonderten Betriebsmodus,
- mindestens ein Registerelement MIR, dessen Inhalt durch Befehle vorgebbar oder fest vorgegeben ist,
- mindestens ein Komparatorelement K zum Umschalten der Ausführungseinheit EU in einen gesonderten Betriebsmodus ansprechend auf die Übereinstimmung des Zählelementes CIC mit dem Registerelement MIR, wobei in dem gesonderten Betriebsmodus zwischengespeicherte, den Prozessorbausteinen zuzuführende externe Ereignisse, welche die Prozessorbausteine beeinflussen, durch die Prozessorbausteine abgerufen werden.

Der Abruf der zwischengespeicherten externen Ereignisse kann dabei vorteilhaft mittels Software, Firmware, Microcode oder Hardware erfolgen.

Ein wesentlicher Vorteil der Erfindung ist darin zu sehen, daß die Verwendung beliebiger neuer oder bestehender Software auf einer hardwarefehlertoleranten Plattform ermöglicht wird, wobei in dieser Plattform eine die Erfindung unterstützende Verarbeitungseinheit zum Einsatz kommen kann, ohne daß die Forderung nach taktsynchroner, deterministischer Arbeitsweise der CPU besteht.

Weitere Vorteile sind:
- Die zueinander redundanten Verarbeitungseinheiten, die beispielsweise aus einer CPU, einer Northbridge und lokalem Speicher gebildet werden, müssen nicht phasenstarr gekoppelt betrieben werden.
- Die CPUs müssen nicht identisch sein, was insbesondere den gleichzeitigen Einsatz verschiedener CPU-Steppings innerhalb eines redundanten Systems ermöglicht, und können mit unterschiedlichen Taktfrequenzen betrieben werden.
- Die CPUs können sich unterschiedlich in Bezug auf die spekulative Ausführung von Instruktionen verhalten.
- Unterschiedliche CPU-interne Ausführungszeiten identischer CPUs, z.B. aufgrund von Korrekturen nach dem datenverfälschendem Auftreten von Alpha-Teilchen, führen lediglich dazu, daß die Synchronisationsereignisse zu geringfügig unterschiedlichen Zeitpunkten erreicht werden.

Die beschriebenen Probleme bei der Sicherstellung der taktsynchron deterministischen Arbeitsweise führen aufgrund der zeitlichen Unschärfe zukünftiger CPUs zu zeitlich nicht exakt korrelierbarer Befehlsausführung. Da die CPU bei einer typischen Applikation auf externe Ereignisse reagieren muß, z.B. auf einen von einem Peripheriegerät generierten Interrupt oder auf Daten, die von einem Gerät in den Hauptspeicher geschrieben wurden, muß sichergestellt werden, daß die CPU von diesen Ereignissen an identischen Stellen in der Befehlsausführung in Kenntnis gesetzt wird, da sonst die Bewertung dieser Ereignisse zu unterschiedlichen Programmabläufen redundanter CPUs führen könnte.

Die vorliegende Erfindung sorgt dafür, daß externe, für den Programmablauf relevante Ereignisse, wie z.B. Interrupts oder von externen Geräten erzeugte Daten, redundanten CPUs an identischen Stellen der Befehlsausführung präsentiert werden und dadurch die Lockstep-Betriebsweise emuliert werden kann.

Außerdem werden Ausgabeereignisse redundanter CPUs, die an identischen Stellen der Befehlsausführung präsentiert werden, verglichen und die Ergebnisse somit validiert. Im Gegensatz zu bekannten Verfahren, die die Synchronisation und die Verteilung von Daten aus der Prozessor-Peripherie durch Software-basierte Methoden bewerkstelligen, wird dies erfindungsgemäß durch Hardware realisiert. Ein entscheidender Vorteil dabei ist, daß der Performanceeinfluß im Vergleich zu den softwarebasierten Verfahren um ein Vielfaches geringer ist. Das beschriebene Verfahren ist darüber hinaus für die Applikations- und Betriebssystem-Software völlig transparent, d.h. existierende Applikations- und Betriebssystem-Software kann ohne Modifikationen weiterhin eingesetzt werden.

Im folgenden wird ein Ausführungsbeispiel der Erfindung im Zusammenhang mit drei Figuren näher erläutert.
- Figur 1: zeigt schematisch zwei Verarbeitungseinheiten mit zugeordneter Peripherie und Synchronisation von Transaktionen.
- Figur 2: zeigt schematisch zwei Verarbeitungseinheiten, die anhand ihrer Peripherietransaktionen mittels zweier Bausteine synchronisiert werden.
- Figur 3: zeigt schematisch den Aufbau einer bevorzugten Verarbeitungseinheit mit weiteren Details.
- Figur 4: zeigt ein Zeitdiagramm der Befehlsabarbeitung zweier verschieden getakteter Verarbeitungseinheiten sowie deren erfindungsgemäße Synchronisierung.

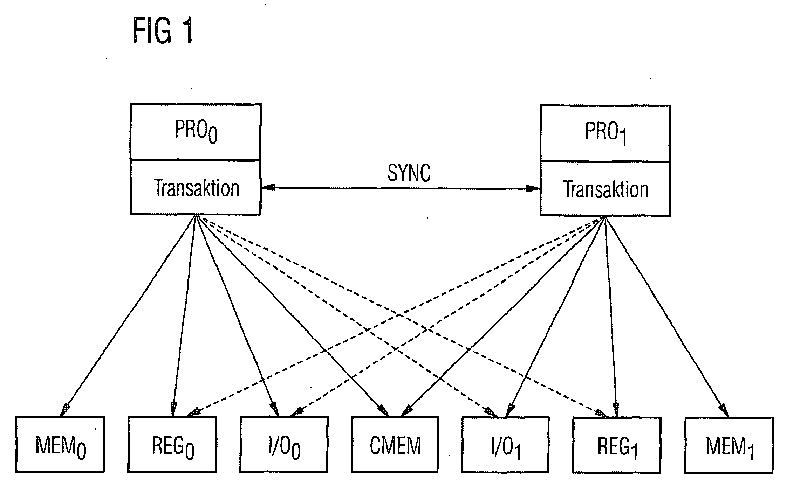

In Figur 1 sind zwei Verarbeitungseinheiten PRO₀, PRO₁ schematisch dargestellt, deren extern wirkende Transaktionen synchronisiert werden. Beispielhaft sind Transaktionen zu folgenden Komponenten dargestellt: lokaler Speicher MEM₀, MEM₁, Register REG₀, REG₁ und Eingabe/Ausgabebausteine bzw. I/O-Bausteine I/O₀, I/O₁. Dabei sind der ersten Verarbeitungseinheit PRO₀ erste Komponenten MEM₀, REG₀ und I/O₀ zugeordnet, während der zweiten Verarbeitungseinheit PRO₁ zweite Komponenten MEM₁, REG₁ und I/O₁ zugeordnet sind. Wie durch entsprechende gestrichelte Verbindungen angedeutet, haben die Verarbeitungseinheiten Zugriff auf die Register REGₙ und die I/O-Bausteine I/Oₘ der jeweils anderen Verarbeitungseinheit, während auf den lokalen Speicher MEMₖ nur die zugeordnete Verarbeitungseinheit PROₖ Zugriff hat.

Ferner ist beispielhaft eine Komponente dargestellt, auf welche die Verarbeitungseinheiten gemeinsam zugreifen, hier gemeinsamer Speicher CMEM, wobei im Unterschied zu den Registern und den I/O-Bausteinen der gemeinsame Speicher keiner der Verarbeitungseinheiten zugeordnet ist.

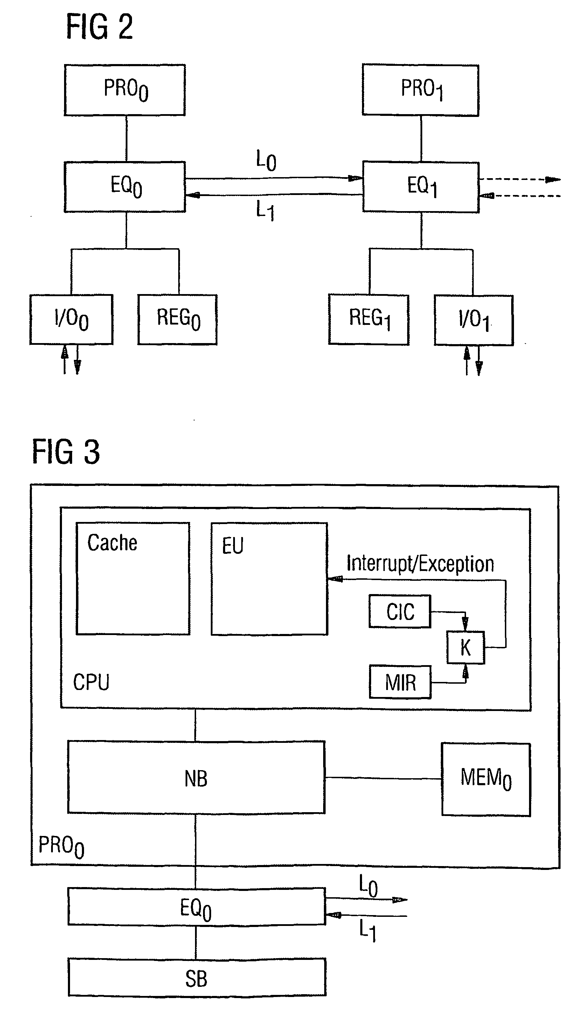

Figur 2 zeigt wiederum die beiden Verarbeitungseinheiten und beispielhaft die I/O-Bausteine sowie die Register aus Figur 1. Diese sind nicht herkömmlich direkt über entsprechende Schnittstellen oder Schnittstellenbausteine verbunden, sondern mittels Equalizer-Bausteinen EQ₀, EQ₁. Alle Zugriffe der Verarbeitungseinheit PRO₀ werden durch den Equalizer EQ₀ empfangen, verarbeitet und entsprechend weitergeleitet, ebenso werden der Verarbeitungseinheit PRO₀ alle externen Daten und Ereignisse durch den Equalizer EQ₀ präsentiert. Analog ist der Verarbeitungseinheit PRO₁ ein gleichwertiger Equalizer EQ₁ zugeordnet.

Die Equalizer EQ₀, EQ₁ tauschen Informationen aus und weisen dazu vorteilhaft eine schnelle und direkte Verbindung L₀, L₁ auf. Diese Verbindung kann, wie dargestellt, logisch und/oder physikalisch in eine erste Verbindung L₀: EQ₀ -> EQ₁ und eine zweite Verbindung L₁: EQ₁ -> EQ₀ aufgeteilt sein.

Wie in Figur 2 gestrichelt angedeutet, können gemäß vorliegender Erfindung auch weitere Einheiten bestehend aus je einer Verarbeitungseinheit PRO, einem Equalizer EQ und Peripherie REG, I/O angeschlossen sein, um ein entsprechend mehrfach redundantes System zu bilden. Durch Zufügen einer weiteren derartigen Einheit würde ein 3fach redundantes System entstehen, in dem bereits eine Fehlerbehandlung durch 2 aus 3 Mehrfachentscheidung stattfinden kann.

Figur 3 zeigt schließlich eine detailliertere Realisierung der Erfindung im Zusammenhang mit einer herkömmlichen Prozessor/Peripheriearchitektur, die sich dadurch auszeichnet, daß eine Hauptprozessor CPU über eine Northbridge-Schnittstelleneinheit NB mit einer Southbridge-Schnittstelleneinheit SB gekoppelt ist, wobei die Northbridge z.B. auch die Schnittstelle mit dem lokalen Speicher MEM₀ umfaßt, während die Southbridge z.B. einen Interrupt-Controller und andere I/O-Funktionen umfaßt.

Wie in Figur 3 beispielhaft dargestellt, kann eine Verarbeitungseinheit PRO₀ aus einer CPU, einer Northbridge und lokalem Speicher aufgebaut sein. Die CPU in einer besonders vorteilhaften Ausgestaltung kann neben den herkömmlichen Einheiten, von denen zur Vereinfachung nur ein Cache-Speicher und eine Ausführungseinheit EU dargestellt sind, ein Register MIR, einen Zähler CIC und einen Vergleicher bzw. Komparator K enthalten, die dazu dienen, externe Ereignisse wie Interrupts und Exceptions nur an bestimmten Stellen in der Befehlsausführung an die Ausführungseinheit weiterzuleiten und einen ansonsten unterbrechungsfreien Ablauf der Abarbeitung von Instruktionsfolgen zu gewährleisten.

Der erfindungsgemäße Equalizer-Baustein EQ₀ ist vorzugsweise zwischen der Northbridge und der Southbridge angeordnet, da die Schnittstelle zwischen Northbridge und Southbridge alle notwendigen Signalleitungen aufweist, um es dem Equalizer zu ermöglichen, die Abarbeitung der Instruktionsfolgen anzuhalten, bis Synchronität der Verarbeitungseinheit PRO₀ mit benachbarten Verarbeitungseinheiten (nicht dargestellt) erreicht ist. Nur angedeutet sind die Verbindungen L₀, L₁ zur Verbindung des Equalizers EQ₀ mit Equalizern benachbarter Verarbeitungseinheiten.

Die in Figur 3 aufgezeigte logische Gruppierung entspricht nicht notwendigerweise der tatsächlichen physikalischen Gruppierung der einzelnen Komponenten. Beispielsweise kann die Northbridge in die CPU integriert sein, oder der Equalizer kann in die Northbridge oder die Southbridge integriert sein oder gemeinsam mit der Northbridge in die CPU.

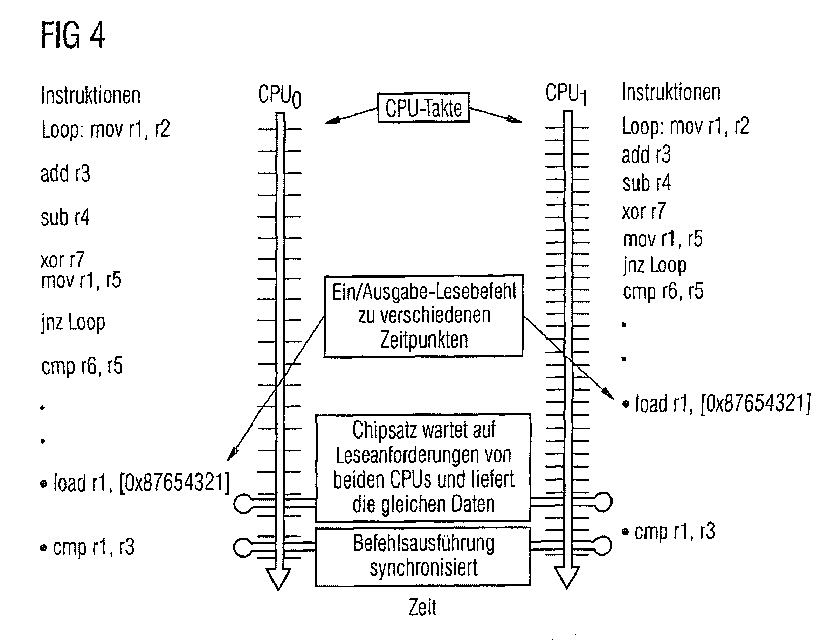

Figur 4 stellt die Synchronisierung der Befehlsausführung zweier Verarbeitungseinheiten in einem Zeitablaufdiagramm grafisch dar. In dem in Figur 4 dargestellten Beispiel werden identische Instruktionsfolgen durch zwei CPUs CPU₀ und-CPU₁ abgearbeitet, wobei CPU₀ mit einer geringeren Taktrate betrieben wird als CPU₁. Damit erreicht CPU₁ jeden Befehl zu einem früheren Zeitpunkt als CPU₀, vorausgesetzt, daß zu Beginn, d.h. bei Abarbeitung der mov r1, r2, sämtliche Register und.den CPUs zugeordnete Speicher synchronisiert waren.

Diese nicht synchrone Befehlsabarbeitung ist tolerierbar, solange die CPU nicht in Interaktion mit der Außenwelt, beispielsweise mittels I/O-Bausteinen oder Zugriffen auf gemeinsamen Speicher, tritt. Für derartige Transaktionen, im Beispiel der Figur 4 das Auslesen des I/O-Registers 0x87654321, ist es allerdings erforderlich, daß diese Transaktionen für beide CPUs gleichzeitig und insbesondere mit dem gleichen Ergebnis stattfinden. Dies wird mittels der Equalizer, wie im folgenden beschrieben, erreicht. Gleichzeitig sorgen die Equalizer an solchen Transaktionspunkten dafür, daß die Synchronität der CPUs wiederhergestellt wird.

In Anlehnung an die Lockstep-Betriebsweise wird das erfindungsgemäße Verfahren im folgenden emulierter Lockstep genannt. Eine Realisierung für den emulierten Lockstep besteht aus mindestens zwei Verarbeitungseinheiten PRO₀ und PRO₁, die aus einer CPU, Speicher sowie Speicheransteuerung (Northbridge eines Standard-Chipsatzes) bestehen können. Diese Verarbeitungseinheiten sind identisch aufgebaut, können jedoch verschiedene CPUs oder verschiedene Steppings einer CPU aufweisen, und werden in identischem Zustand, d.h. identische Speicher- und CPU-Registerinhalte, gestartet. Eine Kopplung über gemeinsame oder synchronisierte Takte ist erfindungsgemäß nicht erforderlich.

Von den CPUs werden im Rahmen der Maschinenbefehlsausführung Speicherzyklen, beispielsweise Schreibzyklen, Lesezyklen und gegebenenfalls I/O-Zyklen initiiert. Zur Synchronisation der CPUs, gegebenenfalls mit Datenaustausch zwischen den CPUs, sind alle Zyklen geeignet, die folgende Bedingungen erfüllen:
(a) sie sind instruktionsdeterministisch, d.h. sie werden identisch von allen CPUs an derselben Programmstelle und in derselben Reihenfolge abgesetzt, und
(b) sie werden von den CPUs immer nach außen abgesetzt, d.h. sie sind immer außerhalb der Prozessoren sichtbar und abgreifbar; prozessorinterne Cachezyklen sind z.B. ungeeignet.

Folgende Speicherzyklen erfüllen beispielsweise diese Randbedingungen:
- nicht-zwischenspeicherbare bzw. non-cachable Speicherzyklen in den eigenen Speicher MEM₀, MEM₁,
- I/O-Zyklen,
- speicherabgebildete bzw. memory mapped I/O-Zyklen, beispielsweise an externe Register REG₀, REG₁,
- nicht-zwischenspeicherbar non-cachable Speicherzyklen an einen externen gemeinsamen Speicher CMEM.

Verschiedene externe Register, z.B. Timer bzw. Zeitgeber, Counter bzw. Zähler und/oder eine Interruptlogik, sowie I/O-Einheiten zur Außenwelt, z.B. Ethernet-Controller oder SCSI-Controller, stehen in der Regel in Kommunikation mit der CPU. Zwischen CPU und I/O-Einheit ist für jede CPU je ein Equalizer über ein asynchrones oder synchrones Interface angeschaltet, der den emulierten Lockstep-Betrieb realisiert. Zwischen den Equalizern EQ₀, EQ₁ sind asynchrone oder synchrone Punktzu-Punkt Verbindungen L₀, L₁ erforderlich, um Daten, Adressen oder Signaturen austauschen zu können. Auf den asynchronen Interfaces ist im Fall von Übertragungsfehlern eine Wiederholung der Übertragung vorsehbar.

Ein lesender oder schreibender Zugriff auf I/O-Einheiten oder Register findet als speicherabgebildete bzw. memory mapped I/O oder direct I/O statt. Die I/O-Einheiten sind alle sichtbar und über getrennte Speicheradressen erreichbar. Dagegen können die Register in einer Master-Master oder einer Master-Slave-Konfiguration geschaltet werden. Bei der Master-Master Konfiguration werden die Register der jeweils zugeordneten Verarbeitungseinheit lesend oder schreibend angesprochen. Voraussetzung für diese Betriebsweise ist, daß Register beim Zugriff der Verarbeitungseinheiten denselben Zustand aufweisen, um die parallele Betriebsweise der Einheiten zu gewährleisten.

Bei der Master-Slave Konfiguration werden von allen Einheiten ausschließlich die Register der Master-Einheit gelesen und die Register der Master-Einheit werden nur von der Master-Einheit beschrieben. Beispielsweise wird zum Auslesen der aktuellen Uhrzeit von allen Einheiten der Time-of-Day-Counter (ToD) der Master-Einheit verwendet, um sicherzustellen, daß alle Einheiten beim Auslesen des ToD-Counters mit exakt derselben Uhrzeit versorgt werden, d.h. nur die einer Verarbeitungseinheit zugeordneten Register werden angesprochen. Ereignisse, wie z.B. Interrupts, die auf anderen Einheiten stattfinden, müssen dann an die Mastereinheit übermittelt werden. Schreibende Zugriffe in diese Register müssen auf allen Einheiten stattfinden bzw. im Hauptspeicher in Schattenregistern hinterlegt werden, um im Fehlerfall mit korrekten Daten mit einer neuen Mastereinheit weiterarbeiten zu können. Dies kann entweder mittels Software oder Hardware gesteuert werden.

Im folgenden werden einzelne Transaktionen und die anhand dieser Transaktionen stattfindenden Synchronisationsvorgänge näher beschrieben.

### Lesende Transaktionen

Der Read-Befehl einer CPU einer Verarbeitungseinheit PRO liest Daten aus einer I/O-Einheit. Ein solcher Lesebefehl ist in Figur 4 illustriert, es handelt sich beispielhaft um den Befehl load r1, [0x87654321]. Dieser Befehl wird von allen CPUs an der gleichen Stelle in der Befehlsausführung generiert und ist an eine bestimmte I/O-Einheit, beispielsweise I/O₀, oder ein Master-Register gerichtet. Der Zeitpunkt des Read-Befehls kann jedoch bei den CPUs unterschiedlich sein. In Figur 4 erreicht CPU₀ den genannten Lesebefehl später als CPU₁.

Die von der CPU erzeugte I/O- Adresse bzw. Speicher-Adresse und die Attribute der Transaktion, z.B. Memory Read oder I/O-Read oder Datenlänge, oder eine aus Adresse und Attributen erzeugte Signatur wird von dem an die CPU direkt angeschlossenen Equalizer an alle anderen Equalizer gesendet. Erst wenn der Equalizer, der an die adressierte I/O-Ressource angeschlossen ist, erkennt, daß die Leseanforderung von allen CPUs generiert worden ist, wird der eigentliche Lesezugriff ausgeführt. Die gelesenen Daten werden bei Master-Slave Konfigurationen an alle Equalizer verteilt, die danach den Read-Befehl der jeweils angeschlossenen CPU abschließen, indem sie die Daten an die CPU weitergeben. Die Daten können zu unterschiedlichen Zeitpunkten bei der CPU eintreffen, jedoch wird dadurch die weitere Programmausführung nicht beeinträchtigt.

Sollte die I/O-Adresse bzw. Signatur bei einem Equalizer abweichen, so wird der Lesezugriff entweder nicht ausgeführt und ein Fehlerinterrupt generiert, beispielsweise ein nicht maskierbarer Interrupt NMI zur CPU, oder es wird eine Mehrheitsentscheidung, z.B. 2 aus 3, getroffen, falls es sich um eine Konfiguration mit 3 vorhandenen CPUs handelt. Die fehlerhafte Einheit wird getrennt und diagnostiziert.

Zur Erkennung von Ausfällen einzelner Einheiten werden die Lesezugriffe zeitlich überwacht, d.h. die Read-Befehle aller CPUs müssen in einer gewissen, vorgebbaren Zeit generiert werden. Wird diese Zeitspanne zwischen den Befehlen überschritten, wird ein Timeout generiert, die ausgefallene Einheit wird getrennt und diagnostiziert.

Lesende Zugriffe werden in der Reihenfolge ihres Auftretens bearbeitet. Ein Überholen ist nicht vorgesehen.

### Schreibende Transaktionen

Der Write-Befehl schreibt Daten in eine I/O-Einheit oder eine Speicher-Einheit. Er wird von allen CPUs an der gleichen Stelle in der Befehlsausführung generiert und ist beispielsweise an eine bestimmte I/O-Einheit gerichtet, z.B. I/O₀. Der Zeitpunkt des Write-Befehls kann jedoch bei den CPUs unterschiedlich sein.

Die beispielsweise von der CPU erzeugte I/O-Adresse, das Datum und die Attribute oder eine daraus berechnete Signatur wird von dem direkt angeschlossenen Equalizer an alle anderen Equalizer gesendet. Erst wenn die Schreibanforderung von allen CPUs generiert worden ist und durch den Equalizer validiert wurde, wird der eigentliche Schreibzugriff ausgeführt.

Sollten die I/O-Adresse, das Datum und/oder die Attribute bzw. die Signatur bei einem Equalizer abweichen, so wird der Schreibzugriff entweder nicht ausgeführt und ein Fehlerinterrupt generiert, beispielsweise ein nicht maskierbarer Interrupt NMI zur CPU, oder es wird eine Mehrheitsentscheidung z.B. 2 aus 3, getroffen, falls es sich um eine Konfiguration mit 3 vorhandenen CPUs handelt. Die fehlerhafte Einheit wird getrennt und diagnostiziert.

Zur Erkennung von Ausfällen einzelner Einheiten werden die Schreibzugriffe zeitlich überwacht, d.h. die Write-Befehle aller CPUs müssen in einer gewissen, vorgebbaren Zeit generiert werden. Wird diese Zeitspanne zwischen den Befehlen überschritten, wird ein Timeout generiert, die ausgefallene Einheit wird getrennt und diagnostiziert.

Schreibende Zugriffe werden in der Reihenfolge ihres Auftretens bearbeitet. Ein Überholen ist nicht vorgesehen. Es ist jedoch möglich, daß mehrere Schreibzyklen von der CPU erzeugt werden (sogenannte Posted Writes). Für die Behandlung dieser mehrfachen schreibenden Transaktionen kann ein entsprechend dimensionierter first-in-first-out-Speicher (nicht dargestellt) vorgesehen werden.

### Interrupts

Die den Programmablauf beeinflussenden externen Ereignisse werden der CPU nicht direkt zugeführt, sondern von einer geeignet gestalteten Hardware zunächst gepuffert. Diese Hardware kann dabei Bestandteil eines Bausteins außerhalb der CPU oder Bestandteil der CPU selbst sein. Die CPU enthält einen Zähler CIC (Completed Instruction Counter), der Instruktionen oder Maschinenbefehle zählt, welche die CPU komplett ausgeführt hat. Die CPU enthält ferner ein Register MIR (Maximum Instruction Register), das von einer den emulierten Lockstep Betrieb unterstützenden Software (ELSO) beschrieben wird.

Ferner weist die CPU den Komparator oder Vergleicher K auf, der die Anzahl der ausgeführten Befehle, also den Zähler CIC, mit dem Register MIR vergleicht und bei Gleichheit beispielsweise eine Interrupt-Anforderung generiert, der die Befehlsausführung nach der Zahl der durch das Register MIR vorgegeben Instruktionen unterbricht und die CPU in einen anderen Betriebsmodus schaltet. In diesem Betriebsmodus wird beispielsweise geeigneter Microcode ausgeführt oder in eine Interrupt Service Routine verzweigt oder per Hardware-Signalen das Erreichen dieses Synchronisationspunktes angezeigt. In diesem Betriebsmodus werden dann den redundanten CPUs die externen Ereignisse so präsentiert, daß nach dem Verlassen dieses Betriebsmodus alle CPUs diese Ereignisse gleich bewerten können und somit in der Folge die gleichen Befehle ausführen werden.

Beispielsweise verzweigt die CPU nach Erreichen der durch das Register MIR vorgegeben Anzahl von Maschineninstruktionen in eine Interrupt Service Routine, in welcher der Zustand von durch die beschriebene Hardware von der CPU ferngehaltenen Interrupt Signalen so abgefragt wird, daß eine redundante CPU, die ggf. diese Abfrage zu einem geringfügig späteren Zeitpunkt stellt, die identische Auskunft erhält. Diese Abfrage ist beispielsweise ein lesender Zugriff auf ein Interruptregister. Dieser lesende Zugriff wird wie oben beschrieben behandelt, wodurch sichergestellt ist, daß alle CPUs den gleichen Interruptvektor lesen und die gleichen Aktionen einleiten.

Vor dem Verlassen des gesonderten Betriebsmodus wird der Zähler CIC zurückgesetzt. Anschließend wird zu der Programmstelle zurückgesprungen, an der die Unterbrechung durch das Erreichen des durch das Register MIR vorgegeben Zählerwertes CIC stattgefunden hat. Danach wird die CPU wieder die durch das Register MIR vorgegebene Anzahl von Maschineninstruktionen ausführen und bei Erreichen des Registerwertes MIR durch Zähler CIC den Mode wechseln und dadurch die Annahme von externen Ereignissen ermöglichen.

Beispielsweise kann eine den emulierten Lockstep-Betrieb unterstützende Software ELSO das Register MIR auf einen Wert von 10.000 setzen. Eine CPU, die mit 5 GHz Taktfrequenz betrieben wird und im Mittel einen Maschinenbefehl pro Takt (Länge eines Taktes: 1/200 ps) ausführt, würde so nach 2 µs in der Befehlsausführung unterbrochen werden und die Synchronisation mit externen Ereignissen ermöglichen.

### Direkter Speicherzugriff DMA

Bei einer DMA-Transaktion (Direct Memory Access) kann eine I/O-Einheit direkt auf den Hauptspeicher lesend und schreibend zugreifen. Der zeitliche Zusammenhang eines Zugriffs von der I/O-Einheit und der CPU ist nicht gegeben. Würde die CPU während eines DMA-Transfers auf denselben Speicherbereich zugreifen, so könnten Verarbeitungseinheiten ihre pseudosynchrone Arbeitsweise verlieren, da die Hauptspeicher der Verarbeitungseinheiten zum Zeitpunkt des Zugriffs nicht mehr notwendigerweise identisch sind.

Für eine DMA-Transaktion muß daher gewährleistet sein, daß eine Benachrichtigung an die CPU gesendet wird, die auf allen CPUs an der gleichen Stelle in der Befehlsausführung eintrifft. Im folgenden werden hierfür mehrere Lösungen aufgezeigt.
- Beispielsweise kann die Benachrichtigung erfolgen, indem die I/O-Einheit nach Abschluß des DMA-Transfers einen Interrupt erzeugt, welcher der CPU bekannt gibt, daß der Transfer abgeschlossen und der transferierte Speicherbereich wieder freigegeben ist. Als Folge des Interrupts wird der Interrupt-Status von der Quelle, also von der I/O-Einheit, gelesen. Dieses Lesen über den I/O-Bus beider Einheiten, z.B. den PCI-Bus, erzwingt eine Serialisierung der Transaktionen, so daß von den I/O-Einheiten generierte Daten in der Folge garantiert im Hauptspeicher aller Verarbeitungseinheiten stehen.
- In einer anderen Ausgestaltung kann bei der Übergabe von durch die CPU einer Verarbeitungseinheit generierten Aufträge an die I/O-Einheiten durch die CPU ein Eintrag in ein Register erfolgen, was den DMA-Transfer auslöst. Alternativ können Scripts oder Listen, die sowohl von CPU als auch von der I/O-Einheit gleichzeitig benutzt werden, als lokaler Speicher bei der I/O-Einheit liegen. Ein möglicher Zugriff von der CPU geschieht dann wie ein memory mapped Read- oder Write-Befehl, und es ist sichergestellt, daß alle CPUs mit denselben Daten arbeiten.
   In der anderen Richtung, wenn ein von der I/O-Einheit bzw. den I/O-Einheiten generierter Deskriptor des Auftrages für die CPU im Hauptspeicher einer Verarbeitungseinheit PRO liegen soll und von den CPUs mit einem Polling-Verfahren ausgelesen wird, lesen die CPUs ein sogenanntes I/O-lockout-Register. Daraufhin wird vom Equalizer zumindest keine Schreibtransaktion der I/O-Einheiten mehr in den lokalen Hauptspeicher der Verarbeitungseinheiten PRO gesendet, und die zuletzt von den I/O-Einheiten gesendeten Schreibtransaktionen werden durch die Equalizer in die lokalen Hauptspeicher aller Verarbeitungseinheiten geschrieben. Dies wird häufig als "to flush" (ausspülen) bezeichnet. Dadurch wird gleicher Inhalt in den Hauptspeichern aller Verarbeitungseinheiten in Bezug auf von I/O-Einheiten generierte Schreibtransaktionen sichergestellt. Anschließend wird die Speicherstelle im Hauptspeicher von allen CPUs gelesen, deren Wert z.B. den Abschluß eines I/O-Auftrags anzeigt. Danach wird das I/O-lockout Register erneut gelesen oder geschrieben oder es wird ein I/O-free Register gelesen oder geschrieben, um den Schreibzugriff auf den Hauptspeicher durch die I/O-Einheiten wieder zu ermöglichen.
- In einer weiteren Ausgestaltung kann das folgende Verfahren angewandt werden, wenn der von der CPU bzw. den CPUs generierte Deskriptor des Auftrages für die I/O-Einheiten im Hauptspeicher der PRO liegen soll, und von diesen per Polling-Verfahren ausgelesen wird: Die CPUs lesen ein sogenanntes I/O-lockout Register. Daraufhin wird von Equalizer zumindest keine Lesetransaktion der I/O-Einheiten mehr zum Hauptspeicher der Verarbeitungseinheiten gesendet. Anschließend wird die Speicherstelle im Hauptspeicher aller CPUs mit einem Wert beschrieben, der einen Trigger bzw. Auslöser für einen I/O-Auftrag darstellt. Danach wird das I/O-lockout Register erneut gelesen oder beschrieben oder es wird ein I/O-free Register gelesen oder beschrieben, um den Lesezugriff auf den Hauptspeicher durch die I/O-Einheiten wieder zu ermöglichen.

### Datenvergleich

Alle Daten, die von I/O-Einheiten aus dem Hauptspeicher gelesen werden, werden durch alle Equalizer aus dem Hauptspeicher der angeschlossenen Verarbeitungseinheiten gelesen, vollständig oder als Signatur, und an den an die anfordernde I/O-Einheit angeschlossenen Equalizer gesendet und von diesem verglichen. Alternativ können die anderen Equalizer ebenfalls einen Vergleich durchführen. Im Falle von Gleichheit werden die Daten an die I/O-Einheit weitergereicht: Falls ein Unterschied erkannt wird, wird gegebenenfalls eine Mehrheitsentscheidung getroffen, z.B. 2 aus 3, und die fehlerhafte Einheit wird abgetrennt und diagnostiziert.

Alle Daten, die von den CPUs der Verarbeitungseinheiten generiert werden, werden vollständig oder als Signatur an den an die Ziel-I/O-Einheit angeschlossenen Equalizer gesendet und durch diesen verglichen. Alternativ können die anderen Einheiten ebenfalls einen Vergleich durchführen. Im Falle von Gleichheit werden die Daten an die I/O-Einheit weitergereicht. Falls ein Unterschied auftritt, wird gegebenenfalls eine Mehrheitsentscheidung getroffen, z.B. 2 aus 3, und die fehlerhafte Einheit wird abgetrennt und diagnostiziert.

Alle durch die CPUs der Verarbeitungseinheit generierten Leseanforderungen, charakterisiert beispielsweise durch das Lesekommando, Adressen und Attribute werden vollständig oder als Signatur an den an die Quelle angeschlossenen Equalizer gesendet und von diesem verglichen. Alternativ können die anderen Einheiten ebenfalls einen Vergleich durchführen. Im Falle von Gleichheit werden die Lesetransaktionen durchgeführt, und die gelesenen Daten an alle Equalizer gesendet. Falls eine Abweichung auftritt, wird gegebenfalls eine Mehrheitsentscheidung getroffen, z.B. 2 aus 3, und die fehlerhafte Einheit wird abgetrennt und diagnostiziert.

Bei emuliertem Lockstep werden Lese- und Schreibtransaktionen der CPU bezüglich ihres lokalen Hauptspeichers MEM nicht verglichen, da diese vollkommen unterschiedlich sein können, z.B. aufgrund unterschiedlicher spekulativer Zugriffe der CPUs oder unterschiedlichem Cache-Verhalten. Um die Inhalte von Speicherbereichen der unterschiedlichen Verarbeitungseinheiten PRO auf Gleichheit zu überprüfen, muß eine Überprüfung durch z.B. eine Routining-Software zu einem Zeitpunkt angestoßen werden, zu dem man sicherstellen kann, daß die Speicherinhalte im fehlerfreien Zustand konsistent sind und für die Dauer der Überprüfung konsistent bleiben. Die Speicherüberprüfung selbst kann durch Software erfolgen, d.h. die Software/CPU liest z.B. einen Speicherbereich, bildet eine Prüfsumme und vergleicht die von den unterschiedlichen Verarbeitungseinheiten ermittelten Prüfsummen. Die Speicherüberprüfung kann aber auch durch Hardware erfolgen, indem z.B. in den Equalizern angeordnete Vorrichtungen den Speicher der angeschlossenen Verarbeitungseinheiten lesen, eine Checksumme bilden und untereinander vergleichen.

### Multiprozessor-Architektur mit shared memory

Der emulierte Lockstep-Betrieb ist auch dazu geeignet, Speicherzugriffe mehrerer Verarbeitungseinheiten auf einen gemeinsamen Speicher (shared memory) CMEM zu synchronisieren und einen wie oben beschrieben Datenvergleich durchzuführen, vorausgesetzt, daß die Transaktionen den eingangs erläuterten Randbedingungen genügen; beispielsweise also non-cachable Speichertransaktionen.

Damit ist es in einer Weiterbildung möglich, Multiprozessor-Konfigurationen zu definieren, die aus mehreren Prozessoreinheiten (mit lokalen Speichern) bestehen, die alle auf einen gemeinsamen Speicher CMEM zugreifen können. Dabei ist jede Prozessoreinheit aus Gründen der Redundanz und zur Fehlererkennung in sich gedoppelt, d.h. eine Prozessoreinheit besteht aus zwei identischen Verarbeitungseinheiten PRO (nicht dargestellt), die in der oben beschriebenen Weise alle Tasks parallel ausführen und sich u.a. bei Zugriff auf den gemeinsamen Speicher synchronisieren und dabei einen Datenvergleich ausführen.

## Patentansprüche

1. Verfahren zur Synchronisation identischer oder verschiedener, redundanter Verarbeitungseinheiten (PRO₀, PRO₁), die identische Instruktionsfolgen abarbeiten und synchron oder asynchron getaktet sind, demgemäß nach außerhalb der Verarbeitungseinheiten (PRO₀, PRO₁) wirkende Transaktionen durch den Verarbeitungseinheiten (PRO₀, PRO₁) zugeordnete Bausteine (EQ₀, EQ₁) zur Synchronisation der Verarbeitungseinheiten (PRO₀, PRO₁) verwendet werden, indem die Verarbeitungseinheiten jeweils durch die zugeordneten Bausteine in einen Wartezustand versetzt werden, bis die Instruktionsausführung aller Verarbeitungseinheiten die aktuelle Transaktion erreicht hat.,
**dadurch gekennzeichnet,**
**daß** durch die Bausteine (EQ₀, EQ₁) Parameter über Verbindungen (L₀, L₁) zur Synchronisation der Verarbeitungseinheiten (PRO₀, PRO₁) übermittelt werden, welche die Transaktionen charakterisieren.

2. Verfahren nach Anspruch 1,
**dadurch gekennzeichnet,**
**daß** eine lesende Transaktion ausgeführt wird, indem der einer Verarbeitungseinheit zugeordnete Baustein die Verarbeitungseinheit bis zum Eintreffen der zu lesenden Daten im Wartezustand beläßt und den oder die Parameter der lesenden Transaktion an den am direktesten mit dem Transaktionsziel (I/O₀, I/O₁, MEM₀, MEM₁, REG₀, REG₁, CMEM) verbundenen Baustein sendet, wobei der am direktesten mit dem Transaktionsziel verbundene Baustein den oder die Parameter der anderen Bausteine sowie den oder die lokal erzeugten Parameter empfängt und vergleicht und bei Übereinstimmung die lesende Transaktion ausführt und die gelesenen Daten an alle Bausteine verteilt, woraufhin alle Bausteine die gelesenen Daten an die zugeordneten Verarbeitungseinheiten weiterleiten und die Fortsetzung der Instruktionsausführung veranlassen.

3. Verfahren nach Anspruch 2,
**dadurch gekennzeichnet,**
**daß** ein Datenvergleich zur Überprüfung der Datenintegrität durchgeführt wird, indem regelmäßig oder auf Anforderung Datenbereiche aus den Hauptspeichern (MEM₀, MEM₁) gelesen und ihre Parameter verglichen werden, wobei der Vergleich durch einen ausgewählten oder durch alle Bausteine erfolgt.

4. Verfahren nach Anspruche 1,
**dadurch gekennzeichnet,**
**daß** eine schreibende Transaktion ausgeführt wird, indem der einer Verarbeitungseinheit zugeordnete Baustein die Verarbeitungseinheit bis zum Abschluß des Schreibenvorganges im Wartezustand beläßt und den oder die Parameter der schreibenden Transaktion an den am direktesten mit dem Transaktionsziel (I/O₀, I/O₁, MEM₀, MEM₁, REG₀, REG₁, CMEM) verbundenen Baustein sendet, wobei der am direktesten mit dem Transaktionsziel verbundene Baustein den oder die Parameter der anderen Bausteine sowie den oder die lokal erzeugten Parameter empfängt und vergleicht und bei Übereinstimmung die schreibende Transaktion ausführt und den erfolgten Schreibvorgang an alle Bausteine quittiert, woraufhin alle Bausteine die Fortsetzung der Instruktionsausführung der zugeordneten Verarbeitungseinheiten veranlassen.

5. Verfahren nach Anspruch 1,
**dadurch gekennzeichnet,**
**daß** externe Ereignisse behandelt werden, indem die externen Ereignisse zwischengespeichert werden, wobei die gespeicherten externen Ereignisse in einem gesonderten Betriebsmodus der Verarbeitungseinheiten zur Verarbeitung durch zumindest je eine Ausführungseinheit der Verarbeitungseinheiten abgerufen werden und wobei die Verarbeitungseinheiten in diesen Betriebsmodus ansprechend auf die Erfüllung einer durch Befehle vorgebbaren oder fest vorgegebenen Bedingung eintreten und die Fortsetzung..der Instruktionsausführung durch die Bausteine (EQ₀, EQ₁) verzögert wird, bis alle Verarbeitungseinheiten den gesonderten Betriebsmodus beendet haben.

6. Verfahren nach Anspruch 5,
**dadurch gekennzeichnet,**
**daß** der Wechsel in den gesonderten Betriebsmodus ausgeführt wird, falls durch Komparatorelemente (K) der Verarbeitungseinheiten die Übereinstimmung von Zählelementen (CIC) mit Registerelementen (MIR) ermittelt wird, wobei der Inhalt der Registerelemente (MIR) durch Befehle vorgebbar und für alle Verarbeitungseinheiten (PRO₀, PRO₁) identisch ist und das Zählelement (CIC) die Anzahl der durch die Ausführungseinheit ausgeführten Instruktionen seit dem letzten Wechsel in den gesonderten Betriebsmodus enthält.

7. Verfahren nach einem der Ansprüche 5 oder 6,
**dadurch gekennzeichnet,**
**daß** die den Verarbeitungseinheiten zugeführten externen Ereignisse eine Ereignisbehandlungsroutine auslösen, die mit der lesenden Transaktion eines Ereignisvektors beginnt, wobei die lesende Transaktion ausgeführt wird, indem der der Verarbeitungseinheit zugeordnete Baustein die Verarbeitungseinheit bis zum Eintreffen der zu lesenden Daten im Wartezustand beläßt und den oder die Parameter der lesenden Transaktion an den am direktesten mit dem Transaktionsziel (I/O₀, I/O₁, MEM₀, MEM₁, REG₀, REG₁, CMEM) verbundenen Baustein sendet, wobei der am direktesten mit dem Transaktionsziel verbundene Baustein den oder die Parameter der anderen Bausteine sowie den oder die lokal erzeugten Parameter empfängt und vergleicht und bei Übereinstimmung die lesende Transaktion ausführt und die gelesenen Daten an alle Bausteine verteilt, woraufhin alle Bausteine die gelesenen Daten an die zugeordneten Verarbeitungseinheiten weiterleiten und die Fortsetzung der Instruktionsausführung veranlassen.

8. Verfahren nach Anspruch 1,
**dadurch gekennzeichnet,**
**daß** ein direkter Speicherzugriff zur Übertragung von Daten aus dem Speicher an einen Eingabe/Ausgabebaustein (I/O₀, I/O₁) erfolgt, indem der direkte Speicherzugriff initiiert wird, indem von einer Verarbeitungseinheit generierte Aufträge an den Eingabe/Ausgabebaustein durch Eintrag in ein Register übergeben werden.

9. Verfahren nach Anspruch 1,
**dadurch gekennzeichnet,**
**daß** ein direkter Speicherzugriff zur Übertragung von Daten von einem Eingabe/Ausgabebaustein (I/O₀, I/O₁) in den Speicher erfolgt,
- indem in einem ersten Schritt ein von dem Eingabe/Ausgabebaustein erzeugter Deskriptor im Speicher abgelegt und von den Verarbeitungseinheiten mit einem Polling-Verfahren ausgelesen wird,
- indem in einem zweiten Schritt ein Register in einem der Bausteine (EO0, EQ1) durch die verarheitungseinheiten gelesen wird, das bewirkt, daß keine Schreibtransaktionen in den Speicher durch Eingabe/Ausgabebausteine mehr zulässig sind,
- indem in einem dritten Schritt die zuletzt von den Eingabe/Ausgabebausteinen gesendeten Schreibtransaktionen durch die Bausteine (EQ0, EQ1) in die Speicher aller Verarbeitungseinheiten geschrieben werden,
- indem in einem vierten Schritt eine Speicherstelle im Speicher von allen Verarbeitungseinheiten gelesen wird, deren Wert den Abschluß eines direkten Speicherzugriffs anzeigt, und
- indem in einem fünften Schritt das Register erneut gelesen wird oder indem ein weiteres Register gelesen oder beschrieben wird, um den Schreibzugriff auf den Hauptspeicher durch die I/O-Einheiten wieder zu ermöglichen.

10. Verfahren nach Anspruch 1,
**dadurch gekennzeichnet,**
**daß** ein direkter Speicherzugriff zur Übertragung von Daten zwischen einem Eingabe/Ausgabebaustein (I/O₀, I/O₁) und dem Speicher erfolgt,
- indem in einem ersten Schritt ein Register in einem der Bausteine (EQ0, EQ1) durch die Verarbeitungseinheiten gelesen wird, das bewirkt, daß keine Lesetransaktionen in den Speicher durch die Eingabe/Ausgabebausteine mehr zulässig sind,
- indem in einem zweiten Schritt ein von den Verarbeitungseinheiten erzeugter Deskriptor im Speicher abgelegt wird, der durch einen oder mehrere Eingabe/Ausgabebaustein(e) (I/O0, I/O1) mit einem Polling-Verfahren auslesbar ist,
- indem in einem dritten Schritt das Register erneut gelesen wird oder indem ein weiteres Register gelesen oder beschrieben wird, um den Lesezugriff auf den Hauptspeicher durch die I/O-Einheiten wieder zu ermöglichen, und
- indem in einem vierten Schritt eine Speicherstelle im Speicher von einem oder mehreren Eingabe/Ausgabebaustein(en) (I/O0, I/O1) gelesen wird, deren Wert den Beginn eines direkten Speicherzugriffs anzeigt

11. Verfahren nach einem der Ansprüche 2 bis 6,
**dadurch gekennzeichnet,**
**daß** durch den am direktesten mit dem Transaktionsziel verbundene Baustein bei Feststellung einer Abweichung der Parameter der anderen Bausteine sowie des oder der lokal erzeugten Parameter(s) eine Fehlerbehandlung eingeleitet wird.

12. Verfahren nach Anspruch 11,
**dadurch gekennzeichnet,**
**daß** die Fehlerbehandlung die auszuführende Transaktion stoppt und eine Routine zur Detektion der fehlerhaften Einheit, deren Isolierung und/oder Wiederherstellung der Synchronität startet.

13. Verfahren nach Anspruch 11,
**dadurch gekennzeichnet,**
**daß** die Fehlerbehandlung bei N vorhandenen Verarbeitungseinheiten eine N-M (M < N) aus N Mehrheitsentscheidung trifft und die abweichende Verarbeitungseinheit deaktiviert.

14. Verfahren nach einem der Ansprüche 1 bis 13,
**dadurch gekennzeichnet,**
**daß** eine Ausfallerkennung einzelner Verarbeitungseinheiten erfolgt, indem für eine beliebige Transaktion beginnend mit dem frühesten Verfügbarwerden des oder der Parameter(s) beim Baustein einer Verarbeitungseinheit nicht oder erst nach Ablauf einer vorgebbaren Zeit eintreffende Parameter verworfen werden, wobei für Verarbeitungseinheiten mit nicht oder erst nach Ablauf der vorgebbaren Zeit eintreffenden Parametern eine Fehlerbehandlung initiiert wird.

15. Verfahren nach einem der Ansprüche 1 bis 14,
**dadurch gekennzeichnet,**
**daß** durch die Bausteine (EQ₀, EQ₁) folgende Transaktionen zur Synchronisation der Verarbeitungseinheiten (PRO₀, PRO₁) verwendet werden:
- nicht-zwischenspeicherbare Speichertransaktionen betreffend einen den jeweiligen Verarbeitungseinheiten (PRO0, PRO1) zugeordneten lokalen Speicher (MEM0, MEM1) und/oder
- Eingabe/Ausgabetransaktionen zu Eingabe/Ausgabebausteinen (I/OO, I/O1) und/oder
- speicherabgebildete Ein/Ausgabetransaktionen zu externen Registern (REG0, REG1) und/oder
- nicht-zwischenspeicherbare Speichertransaktionen betreffend einen gemeinsamen Speicher (CMEM) der Verarbeitungseinheiten (PRO0, PRO1).

16. Verfahren nach einem der Ansprüche 1 bis 15,
**dadurch gekennzeichnet,**
**daß** durch die Bausteine (EQ₀, EQ₁) folgende Parameter von Transaktionen über Verbindungen (L₀, L₁) zur Synchronisation der Verarbeitungseinheiten (PRO₀, PRO₁) übermittelt werden:
- Eingabe/Ausgabeadressen und/oder
- Speicheradressen und/oder
- zu transferierende Daten und/oder
- Art der Transaktion und/oder
- eine aus den Eingabe/Ausgabeadressen und/oder den Speicheradressen und/oder den zu transferierenden Daten und/oder der Art der Transaktion gebildete Signatur.

17. Anordnung zur Synchronisation synchron oder asynchron getakteter Verarbeitungseinheiten (PRO₀, PR0₁) redundanter Datenverarbeitungssysteme, die folgendes aufweist:
- mindestens zwei Verarbeitungseinheiten (PRO0, PRO1) zur Abarbeitung identischer Instruktionsfolgen,
- den Verarbeitungseinheiten jeweils exklusiv zugeordnete Peripherie (MEM0, MEM1) zum Speichern und/oder Austauschen von Daten,
- von allen Verarbeitungseinheiten gemeinsam nutzbare Peripherie (I/O0, I/O1, REG0, REG1, CMEM) zum Speichern und/oder Austauschen von Daten,
- den Verarbeitungseinheiten zugeordnete Bausteine (EQ0₇ EQ1), wobei die Bausteine (EQ0, EQ1) Mittel zum Überwachen von Transaktionen sowie Mittel zum Auslösen eines Wartezustandes der zugeordneten Verarbeitungseinheit bis zum Erreichen der aktuellen Transaktion durch alle Verarbeitungseinheiten aufweisen **dadurch gekennzeichnet, daß** die Anordnung darüber hinaus Mittel (L0, L1) zum Übertragen von die Transaktionen charakterisierenden Parametern an andere Bausteine aufweist.

18. Anordnung nach Anspruch 17, wobei jede Verarbeitungseinheit folgendes aufweist:
- mindestens eine Ausführungseinheit (EU),
- mindestens ein Zählerelement (CIC) zum Zählen der durch die Ausführungseinheit ausgeführten Instruktionen seit dem letzten Wechsel in den gesonderten Betriebsmodus,
- mindestens ein Registerelement (MIR), dessen Inhalt durch Befehle vorgebbar oder fest vorgegeben ist,
- mindestens ein Komparatorelement (K) zum Umschalten der Ausführungseinheit (EU) in einen gesonderten Betriebsmodus ansprechend auf die Übereinstimmung des Zählelementes (CIC) mit dem Registerelement (MIR), wobei in dem gesonderten Betriebsmodus zwischengespeicherte, den Prozessorbausteinen zuzuführende externe Ereignisse, welche die Prozessorbausteine beeinflussen, durch die Prozessorbausteine abgerufen werden.

19. Anordnung nach einem der Ansprüche 17 oder 18,
**dadurch gekennzeichnet,**
**daß** die Bausteine (EQ₀, EQ₁) Mittel zum Synchronisieren der Verarbeitungseinheiten anhand folgender Transaktionen aufweisen:
- nicht-zwischenspeicherbare Speichertransaktionen betreffend einen den jeweiligen Verarbeitungseinheiten (PRO0, PRO1) zugeordneten lokalen Speicher (MEM0, MEM1) und/oder
- Eingabe/Ausgabetransaktionen zu Eingabe/Ausgabebausteinen (I/O0, I/O1) und/oder
- speicherabgebildete Ein/Ausgabetransaktionen zu externen Registern (REG0, REG1) und/oder
- nicht-zwischenspeicherbare Speichertransaktionen betreffend einen gemeinsamen Speicher (CMEM) der Verarbeitungseinheiten (PRO0, PRO1).

20. Anordnung nach einem der Ansprüche 17 bis 19,
**dadurch gekennzeichnet,**
**daß** die Bausteine Mittel zum Bilden folgender Parameter repräsentativ für Transaktionen aufweisen:
- Eingabe/Ausgabeadressen und/oder
- Speicheradressen und/oder
- zu transferierende Daten und/oder
- Art der Transaktion und/oder
- eine aus den Eingabe/Ausgabeadressen und/oder den Speicheradressen und/oder den zu transferierenden Daten und/oder der Art der Transaktion gebildete Signatur.

## Claims

1. Method for synchronisation of identical or different, redundant processing units (PRO₀, PRO₁), which process identical instruction sequences and are clocked synchronously or asynchronously, in accordance with which active transactions outside the processing units (PRO₀, PRO₁) are used by the blocks (EQ₀, EQ₁) assigned to the processing units (PRO₀, PRO₁) for synchronisation of the processing (PRO₀, PRO₁), in that the processing units are put into a wait state by the assigned blocks in each case until the instruction execution of all processing units has reached the current transaction,
**characterised in that**
through the blocks (EQ₀, EQ₁) parameters which characterise the transaction are transferred via data connections (L₀, L₁) for synchronisation of the processing units (PRO₀, PRO₁) .

2. Method in accordance with claim 1,
**characterised in that**
a read transaction is executed by the block assigned to a processing unit leaving the processing unit in the wait state until the arrival of the data to be read and sending the parameter or parameters of the read transaction to the block most directly linked to the transaction destination (I/O₀, I/O₁, MEM₁, MEM₀, REG₀, REG₁, CMEM) with the block linked most directly to the transaction destination receiving the parameter or parameters of the other blocks as well as the locally generated parameter or parameters and comparing them and, if they match, executing the read transaction and distributing the read data to all blocks, whereon all blocks forward the data read to the assigned processing
units and enable the instruction execution to continue.

3. Method in accordance with claim 2,
**characterised in that**
a data comparison is performed to check the data integrity, **in that** at regular intervals or on request data areas are read from the main memories (MEM₀, MEM₁) and their parameters are compared, with the comparison being undertaken by a selected block or by all blocks.

4. Method in accordance with claim 1,
**characterised in that**
a write transaction is executed by the block assigned to a processing unit leaving the processing unit in the wait state until the completion of the write transaction and sending the parameter or parameters of the write transaction to the block most directly linked to the transaction destination (I/O₀, I/O₁, MEM₀, MEM₁, REG₀, REG₁, CMEM) with the block linked most directly to the transaction destination receiving the parameter or parameters of the other blocks as well as the locally generated parameter or parameters and comparing them and, if they match, executing the write transaction and acknowledging the completed write transaction to all blocks, whereon all blocks cause the instruction execution to continue.

5. Method in accordance with claim 1,
**characterised in that**
external events are handled by caching the external events, with the stored external events being retrieved for processing in a separate operating mode of the processing unit by at least one execution unit of the processing units and
with the processing units in this operating mode responding to the fulfilment of a condition that can be specified by instructions or is preset and the continuation of the instruction execution being delayed by the blocks (EQ₀, EQ₁) until all processing units have ended the separate operating mode.

6. Method in accordance with claim 5,
**characterised in that**
the change to the separate operating mode is made if comparator elements (K) of the processing units determine that counter elements (CIC) match register elements (MIR), with the content of the register elements (MIR) being able to be specified by instructions and being identical for all processing units (PRO₀, PRO₁) and the counter element (CIC) containing the number of instructions executed by the execution unit since the last change to the separate operating mode.

7. Method in accordance with one of the claims 5 or 6,
**characterised in that**
the external events directed into the processing units initiate an event handling routine which begins with the read transaction of an event vector with the read transaction being executed by the block assigned to the processing unit leaving a reprocessing unit in a wait state until the arrival of the data to be read and sending of the parameter or the parameters of the block connected most directly with the read transaction to the transaction destination (I/O₀, I/O₁, MEM₀, MEM₁, REG₀, REG₁, CMEM), with the block connected most directly to the transaction destination of receiving a the parameter or the parameters of the other blocks as well as the parameter or parameters generated locally and comparing them and, if they match, executing the read transaction and distributing the data read to all blocks, whereon the all blocks forward the data read to the assigned processing units and cause the execution of instructions to continue.

8. Method in accordance with claim 1
**characterised in that**
a direct memory access for transmission of data blocks from the memory to an input/output block (I/O₀, I/O₁) is undertaken by a direct memory access being initiated, **in that** jobs generated by a processing unit are transferred to the input/output block by an entry in a register.

9. Method in accordance with claim 1
**characterised in that**
a direct memory access for transmission of data from an input/output block (I/O₀, I/O₁) is undertaken in the memory,
- **in that**, in a first step, a descriptor created by the input/output block is stored in the memory and is read out by the processing units with a polling procedure,
- **in that**, in a second step, a register in one of the blocks (EQ₀, EQ₁) is read by the processing units which has the effect of not allowing any more write transactions in the memory by input/output blocks,
- **in that**, in a third step, the write transactions last sent by the input/output blocks are written by the blocks (EQ₀, EQ₁) into the memories of all processing units,
- **in that**, in a fourth step, a memory location in the memory of all processing units is read for which the value indicated the completion of the direct memory access, and
- **in that**, in a fifth step, the register is read again or **in that** a further register is read or written, to again enable write access to main memory by the I/O units.

10. Method in accordance with claim 1
**characterised in that**
a direct memory access is undertaken for transmission of data between an input/output block (I/O₀, I/O₁) and the memory,
- **in that**, in a first step, a register in one of the blocks (EQ₀, EQ₁) is read by the processing units which has the effect of not allowing any more read transactions in the memory by input/output blocks,
- **in that**, in a second step, a descriptor created by the processing units is stored in the memory which can be read out by one or more of the input/output blocks) (I/O₀, I/O₁) with a polling method,
- **in that**, in a third step, the register is read again or **in that** a further register is read or written, to again enable read access to main memory by the I/O units and
- **in that**, in a fourth step, a memory location in the memory of one or more input/output blocks (I/O₀, I/O₁) is read for which the value indicates the start of direct memory access

11. Method in accordance with one of the claims 2 to 6,
**characterised in that**,
error handling can be initiated by the block linked most directly with the transaction destination on detection of a deviation of the parameters of the other blocks as well as of the locally generated parameter or parameters.

12. Method in accordance with claim 11,
**characterised in that**
the error handling stops the transaction to be executed and starts a routine for detection of the faulty unit, its isolation and/or recovery of synchronisation.

13. Method in accordance with claim 11,
**characterised in that**
the error handling for N available processing units makes an N-M (M < N) out of N majority decision and deactivates the unit with the discrepancy.

14. Method in accordance with one of the claims 1 to 13,
**characterised in that**
a detection of the failure of individual processing units is undertaken **in that** for a given transaction, beginning with the earliest availability of the parameter or parameters for the block of a processing unit. parameters which do not arrive or only arrive after a predetermined time are discarded, with their handling being initiated for processing units with parameters which do not arrive or only arrive after a predetermined time.

15. Method in accordance with one of the claims 1 to 14,
**characterised in that**
through the blocks (EQ₀, EQ₁) the following transactions for synchronisation of the processing units (PRO₀, PRO₁) are used:
- Non-cacheable memory transactions relating to a local memory (MEM₀, MEM₁) assigned to the relevant processing units (PRO₀, PRO₁) and/or
- input/output transactions to input/output blocks (I/O₀, I/O₁) and/or
- Memory-mapped input/output transactions to external registers (REG₀, REG₁) and/or
- Non-cacheable memory transactions relating to of a common memory (CMEM) of the processing units (PRO₀, PRO₁).

16. Method in accordance with one of the claims 1 to 15,
**characterised in that**,
through the blocks (EQ₀, EQ₁) the following parameters of transactions are transferred via data connections (L₀, L₁) for synchronisation of the processing units (PRO₀, PRO₁).
- Input/output addresses and/or
- Memory addresses and/or
- Data to be transferred and/or
- Type of transaction and/or
- A signature formed from the input/output addresses and/or the memory addresses and/or the data to be transferred and/or the type of transaction.

17. Arrangement for synchronisation of synchronously or asynchronously clocked processing units (PRO₀, PRO₁) of redundant data processing systems with the following features:
- At least two processing units (PRO₀, PRO₁) for processing identical instruction sequences,
- Peripherals (MEM₀, MEM₁) exclusively assigned to the processing units in each case for saving or exchanging data,
- Peripherals I/O₀, I/O₁, REG₀, REG₁, CMEM) which can be used jointly by all processing units for saving and/or exchanging data,
- Blocks (EQ₀, EQ₁) assigned to the processing units, with the blocks (EQ₀, EQ₁) featuring a means for monitoring transactions as well as means for stopping the assigned processing units until the current transaction is reached by all processing units, **characterised in that** the arrangement further comprises means (L₀, L₁) for transmission of parameters of the transaction to other blocks.

18. Arrangement according to claim 17, where each processing unit has the following features:
- At least one Execution Unit (EU),
- At least one counter element (CIC) for counting the instructions executed by the execution unit since the last switchover to the separate operating mode,
- At least one register element (MIR), for which the content can be specified through commands specifiable or can be predetermined,
- At least one comparator element (K) to switch-over the execution unit (EU) into a separate operating mode responding to the correspondence of the counter element (CIC) with the register element of (MIR), with external events cached in the separate operating mode to be routed to the processor modules which influence the processor modules being retrieved by the processor modules.

19. Arrangement in accordance with one of the claims 17 or 18,
**characterised in that**,
the blocks (EQ₀, EQ₁) feature means for synchronisation of the processing units especially on the basis of the following transactions:
- Non-cacheable memory transactions relating to a local memory (MEM₀, MEM₁) assigned to the relevant processing units (PRO₀, PRO₁) and/or
- Input/output transactions to input/output blocks (I/O₀, I/O₁) and/or
- Memory-mapped input/output transactions to external registers (REG₀, REG₁) and/or
- Non-cacheable memory transactions relating to a common memory (CMEM) of the processing units (PRO₀, PRO₁).

20. Arrangement in accordance with one of the claims 17 to 19,
**characterised in that**,
the blocks feature means for forming the following parameters representing transactions:
- Input/output addresses and/or
- Memory addresses and/or
- Data to be transferred and/or
- Type of transaction and/or
- A signature formed from the input/output addresses and/or the memory addresses and/or the data to be transferred and/or the type of transaction

## Revendications

1. Procédé de synchronisation d'unités de traitement (PRO₀, PRO₁) redondantes, identiques ou différentes, qui exécutent des suites d'instructions identiques et sont cadencées de manière synchrone ou asynchrone, selon lequel des transactions produisant un effet vers l'extérieur des unités de traitement (PRO₀, PRO₁) sont utilisées par des composants (EQ₀, EQ₁) affectés aux unités de traitement (PRO₀, PRO₁) pour la synchronisation des unités de traitement (PRO₀, PRO₁) par mise des unités de traitement dans un état d'attente respectivement par les composants associés jusqu'à ce que l'exécution des instructions par toutes les unités de traitement ait atteint la transaction actuelle, **caractérisé en ce que** des paramètres sont transmis par les composants (EQ0, EQ1) par l'intermédiaire de connexions (L₀, L₁) pour la synchronisation des unités de traitement (PRO₀, PRO₁), lesquels **caractérisent** les transactions.

2. Procédé selon la revendication 1,
**caractérisé en ce**
**qu'**une transaction de lecture est exécutée par le fait que le composant affecté à une unité de traitement laisse l'unité de traitement en état d'attente jusqu'à l'arrivée des données à lire et envoie le ou les paramètres de la transaction de lecture au composant relié le plus directement à la destination de la transaction (I/O₀, I/O₁, MEM₀, MEM₁, REG₀, REG₁, CMEM), le composant relié le plus directement à la destination de la transaction recevant et comparant le ou les paramètres des autres composants ainsi que le ou les paramètres générés localement et exécutant la transaction de lecture s'il y a coïncidence et répartissant les données lues à tous les composants, suite à quoi tous les composants retransmettent les données lues aux unités de traitement associées et font se poursuivre l'exécution des instructions.

3. Procédé selon la revendication 2,
**caractérisé en ce**
**qu'**une comparaison de données est effectuée pour contrôler l'intégrité des données, par lecture, régulière ou sur demande, de zones de données hors des mémoires principales (MEM₀, MEM₁) et par comparaison de leurs paramètres, la comparaison se faisant par un composant sélectionné ou par tous les composants.

4. Procédé selon la revendication 1,
**caractérisé en ce**
**qu'**une transaction d'écriture est exécutée par le fait que le composant affecté à une unité de traitement laisse l'unité de traitement en état d'attente jusqu'à la fin de l'opération d'écriture et envoie le ou les paramètres de la transaction d'écriture au composant relié le plus directement à la destination de la transaction (I/O₀, I/O₁, MEM₀, MEM₁, REG₀, REG₁, CMEM), le composant relié le plus directement à la destination de la transaction recevant et comparant le ou les paramètres des autres composants ainsi que le ou les paramètres générés localement et exécutant la transaction d'écriture s'il y a coïncidence et confirmant à tous les composants le fait que l'opération d'écriture a eu lieu, suite à quoi tous les composants font se poursuivre l'exécution des instructions par les unités de traitement associées.

5. Procédé selon la revendication 1,
**caractérisé en ce**
**que** des événements externes sont traités par mise en mémoire temporaire des événements externes, les événements externes mis en mémoire étant appelés dans un mode de fonctionnement séparé des unités de traitement pour le traitement par au moins respectivement une unité d'exécution des unités de traitement et les unités de traitement intervenant dans ce mode de fonctionnement en réponse à la satisfaction d'une condition prédéterminable ou fixement prédéterminée par des ordres et la poursuite de l'exécution des instructions étant retardée par les composants (EQ₀, EQ₁) jusqu'à ce que toutes les unités de traitement aient terminé le mode de fonctionnement séparé.

6. Procédé selon la revendication 5,
**caractérisé en ce**
**que** le passage au mode de fonctionnement séparé est exécuté si des éléments de comparateurs (K) des unités de traitement établissent la coïncidence entre des éléments de comptage (CIC) et des éléments de registres (MIR), le contenu des éléments de registres (MIR) étant prédéterminable par des ordres et identique pour toutes les unités de traitement (PRO₀, PRO₁) et l'élément de comptage (CIC) contenant le nombre des instructions exécutées par l'unité d'exécution depuis le dernier passage au mode de fonctionnement séparé.

7. Procédé selon l'une des revendications 5 ou 6,
**caractérisé en ce**
**que** les événements externes amenés aux unités de traitement déclenchent une routine de traitement d'événements qui commence par la transaction de lecture d'un vecteur d'événement, la transaction de lecture étant exécutée par le fait que le composant affecté à l'unité de traitement laisse l'unité de traitement en état d'attente jusqu'à l'arrivée des données à lire et envoie le ou les paramètres de la transaction de lecture au composant relié le plus directement à la destination de la transaction (I/O₀, I/O₁, MEM₀, MEM₁, REG₀, REG₁, CMEM), le composant relié le plus directement à la destination de la transaction recevant et comparant le ou les paramètres des autres composants ainsi que le ou les paramètres générés localement et exécutant la transaction de lecture s'il y a coïncidence et répartissant les données lues à tous les composants, suite à quoi tous les composants retransmettent les données lues aux unités de traitement associées et font se poursuivre l'exécution des instructions.

8. Procédé selon la revendication 1,
**caractérisé en ce**
**qu'**un accès de mémoire direct pour la transmission de données à partir de la mémoire vers un composant d'entrée /sortie (I/O₀, I/O₁) se produit par initialisation de l'accès de mémoire direct par transmission de missions générées par une unité de traitement au composant d'entrée / sortie par entrée dans un registre.

9. Procédé selon la revendication 1,
**caractérisé en ce**
**qu'**un accès de mémoire direct pour la transmission de données d'un composant d'entrée / sortie (I/O₀, I/O₁) à la mémoire se produit
- dans une première étape, un descripteur généré par le composant d'entrée / sortie est déposé dans la mémoire et est lu par les unités de traitement avec une méthode de polling,
- dans une deuxième étape, un registre est lu dans l'un des composants (EQ₀, EQ₁) par les unités de traitement, lequel provoque qu'aucune transaction d'écriture n'est plus autorisée vers la mémoire par des composants d'entrée /sortie,
- dans une troisième étape, les transactions d'écriture envoyées en dernier lieu par les composants d'entrée /sortie sont écrites par les composants (EQ₀, EQ₁) dans les mémoires de toutes les unités de traitement,
- dans une quatrième étape, un emplacement de mémoire est lu dans la mémoire par toutes les unités de traitement dont la valeur indique la fin d'un accès de mémoire direct et
- dans une cinquième étape, le registre est de nouveau lu ou par le fait qu'un autre registre est lu ou écrit pour permettre de nouveau l'accès d'écriture à la mémoire principale par les unités I/O.

10. Procédé selon la revendication 1,
**caractérisé en ce**
**qu'**un accès de mémoire direct pour la transmission de données entre un composant d'entrée / sortie (I/O₀, I/O₁) et la mémoire se produit
- dans une première étape, un registre est lu dans l'un des composants (EQ₀, EQ₁) par les unités de traitement, lequel provoque qu'aucune transaction d'écriture n'est plus autorisée vers la mémoire par les composants d'entrée /sortie,
- dans une deuxième étape, un descripteur généré par les unités de traitement est déposé dans la mémoire, lequel est lisible par un ou plusieurs composants d'entrée / sortie (I/O₀, I/O₁) avec une méthode de polling,
- dans une troisième étape, le registre est de nouveau lu ou par le fait qu'un autre registre est lu ou écrit pour permettre de nouveau l'accès de lecture à la mémoire principale par les unités I/O et
- dans une quatrième étape, un emplacement de mémoire est lu dans la mémoire par un ou plusieurs composants d'entrée /sortie (I/O₀, I/O₁) dont la valeur indique le début d'un accès de mémoire direct.

11. Procédé selon l'une des revendications 2 à 6,
**caractérisé en ce**
**que** le composant relié le plus directement à la destination de la transaction initialise un traitement d'erreur en cas de constatation d'une différence des paramètres des autres composants ainsi que du ou des paramètres générés localement.

12. Procédé selon la revendication 11,
**caractérisé en ce**
**que** le traitement d'erreur stoppe la transaction à exécuter et lance une routine de détection de l'unité défectueuse, d'isolement de celle-ci et/ou de rétablissement de la synchronicité.

13. Procédé selon la revendication 11,
**caractérisé en ce**
**que** le traitement d'erreur, en présence de N unités de traitement, prend une décision multiple N-M (M<N) sur N et désactive l'unité de traitement qui diffère.

14. Procédé selon l'une des revendications 1 à 13,
**caractérisé en ce**
**qu'**une reconnaissance de défaillance d'unités de traitement individuelles se produit par rejet, pour une transaction quelconque, de paramètres n'entrant pas ou n'entrant qu'à l'expiration d'un temps prédéterminable au niveau du composant d'une unité de traitement, en commençant par le moment le plus tôt auquel le ou les paramètres deviennent disponibles, un traitement d'erreurs étant initialisé, pour des unités de traitement, avec des paramètres qui n'entrent pas ou qui n'entrent qu'à l'expiration du temps prédéterminable.

15. Procédé selon l'une des revendications 1 à 14,
**caractérisé en ce**
**que** les transactions suivantes sont utilisées par les composants (EQ₀, EQ₁) pour la synchronisation des unités de traitement (PRO₀, PRO₁) :
- des transactions de mémoire qui ne peuvent pas être mises en mémoire temporaire, concernant une mémoire locale (MEM₀, MEM₁) affectée aux unités de traitement respectives (PRO₀, PRO₁) et /ou
- des transactions d'entrée / de sortie concernant des composants d'entrée / de sortie (I/O₀, I/O₁) et/ou
- des transactions d'entrée / de sortie mappées en mémoire, concernant des registres externes (REG₀, REG₁) et/ou
- des transactions de mémoire qui ne peuvent pas être mises en mémoire temporaire, concernant une mémoire commune (CMEM) des unités de traitement (PRO₀, PRO₁).

16. Procédé selon l'une des revendications 1 à 15,
**caractérisé en ce**
**que** les paramètres suivants de transactions sont transmis par les composants (EQ₀, EQ₁) par l'intermédiaire de connexions (L₀, L₁) pour synchroniser les unités de traitement (PRO₀, PRO₁):
- adresses d'entrée / de sortie et/ou
- adresses de mémoires et/ou
- données à transférer et/ou
- type de transaction et/ou
- une signature constituée à partir des adresses d'entrée /de sortie et/ou des adresses de mémoires et/ou des données à transférer et/ou du type de transaction.

17. Ensemble pour la synchronisation d'unités de traitement (PRO₀, PRO₁) cadencées de manière synchrone ou asynchrone de systèmes de traitement de données redondants, lequel comporte:
- au moins deux unités de traitement (PRO₀, PRO₁) pour exécuter des suites d'instructions identiques,
- une périphérie (MEM₀, MEM₁) affectée respectivement de manière exclusive aux unités de traitement, pour mettre des données en mémoire et/ou les échanger,
- une périphérie (I/O₀, I/O₁, REG₀, REG₁, CMEM) utilisable en commun par toutes les unités de traitement, pour mettre des données en mémoire et/ou les échanger,
- des composants (EQ₀, EQ₁) affectés aux unités de traitement, les composants (EQ₀, EQ₁) comportant des moyens de surveillance de transactions ainsi que des moyens pour déclencher un état d'attente de l'unité de traitement associée jusqu'à ce que toutes les unités de traitement aient atteint la transaction actuelle, **caractérisée en ce que** l'ensemble comporte, en outre, des moyens (L₀, L₁) pour transmettre à d'autres composants des paramètres caractérisant les transactions.

18. Ensemble selon la revendication 17, chaque unité de traitement comportant:
- au moins une unité d'exécution (EU),
- au moins un élément de compteur (CIC) pour compter les instructions exécutées par l'unité d'exécution depuis le dernier passage au mode de fonctionnement séparé,
- au moins un élément de registre (MIR) dont le contenu est prédéterminable ou fixement prédéterminé par des instructions,
- au moins un élément de comparateur (K) pour commuter l'unité d'exécution (EU) pour la faire passer dans un mode de fonctionnement séparé en réponse à la coïncidence entre l'élément de comptage (CIC) et l'élément de registre (MIR), des événements externes à amener aux composants de processeurs et mis en mémoire temporaire en mode de fonctionnement séparé, lesquels influencent les composants de processeurs, étant appelés par les composants de processeurs.

19. Ensemble selon l'une des revendications 17 ou 18,
**caractérisée en ce**
**que** les composants (EQ₀, EQ₁) comportent des moyens pour synchroniser les unités de traitement à l'aide des transactions suivantes:
- des transactions de mémoire qui ne peuvent pas être mises en mémoire temporaire, concernant une mémoire locale (MEM₀, MEM₁) affectée aux unités de traitement respectives (PRO₀, PRO₁) et/ou
- des transactions d'entrée / de sortie concernant des composants d'entrée / de sortie (I/O₀, I/O₁) et/ou
- des transactions d'entrée / de sortie mappées en mémoire, concernant des registres externes (REG₀, REG₁) et/ou
- des transactions de mémoire qui ne peuvent pas être mises en mémoire temporaire, concernant une mémoire commune (CMEM) des unités de traitement (PRO₀, PRO₁) .

20. Ensemble selon l'une des revendications 17 à 19,
**caractérisée en ce**
**que** les composants comportent des moyens pour constituer les paramètres suivants de manière représentative pour des transactions:
- adresses d'entrée / de sortie et/ou
- adresses de mémoires et/ou
- données à transférer et/ou
- type de transaction et/ou
- une signature constituée à partir des adresses d'entrée /de sortie et/ou des adresses de mémoires et/ou des données à transférer et/ou du type de transaction.
